(19)

Europäisches
Patentamt

European
Patent Office

Office européen
des brevets

(11)  **EP 4 618 342 A1**

(12)  **EUROPEAN PATENT APPLICATION**

(43) Date of publication:
**17.09.2025  Bulletin 2025/38**

(21) Application number: **24162666.2**

(22) Date of filing: **11.03.2024**

(51) International Patent Classification (IPC):
**H02H 3/40** *(2006.01)*   **H02H 7/26** *(2006.01)*

(52) Cooperative Patent Classification (CPC):
**H02H 3/405;** H02H 7/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd
8050 Zürich (CH)**

(72) Inventors:
• **WANG, Jianping
  724 60 Västerås (SE)**
• **LI, YouYi
  722 19 Västerås (SE)**
• **HOQ, Md Tanbhir
  722 46 Västerås (SE)**

(74) Representative: **Vossius & Partner
Patentanwälte Rechtsanwälte mbB
Siebertstrasse 3
81675 München (DE)**

(54)  **PHASE SELECTION BASED ON REACH POINT VOLTAGE CALCULATION FOR LINE DISTANCE PROTECTION**

(57)  The present disclosure relates to a method for determining a fault type of a fault on a transmission line, wherein the transmission line is comprised in an electrical system, the method comprising: obtaining a sequence voltage and/or current determined for a first location on the transmission line and a further at least one voltage and/or current determined for the first location on the transmission line; and determining the fault type of the fault on the transmission line by evaluating a plurality of criteria involving the sequence voltage and/or current and the further at least one voltage and/or current.

EP 4 618 342 A1

**Description**

The present disclosure relates to a method, a device, and a system for determining a fault type e on a transmission line, wherein the transmission line is comprised in an electrical system.

In an electrical system comprising a transmission line, it is of high importance to accurately identify a fault type for further corrective actions. Among others, a distance protection is widely used to protect the transmission line.

Conventionally, particularly in a distance protection, a fault-related phase is determined by analyzing the data that is processed based on the currents and voltages measured at a relay location. Such processed data may be sequence voltages or currents, or on the superimposed quantities. For instance, a method may determine the fault type based on the phase angles of sequence voltages computed on the transmission line. It is also possible to identify a fault-related phase based on the phase angles of sequence voltages computed for a reach point on the transmission line.

However, often the processed data used in the conventional methods require computationally intensive steps such as the domain conversion from a time-domain to a frequency-domain, phase angle calculations and comparisons, etc. Such step may also further introduce errors when performed prematurely in the processing step. Among others, such problem renders the conventional method computationally inefficient.

Thus, there is a need for an improved a method, a device, and a system for determining a fault type of a fault on a transmission line, wherein the transmission line is comprised in an electrical system.

The present disclosure relates to a method for determining a fault type of a fault on a transmission line, wherein the transmission line is comprised in an electrical system, the method comprising: obtaining a sequence voltage and/or current determined for a first location on the transmission line and a further at least one voltage and/or current determined for the first location on the transmission line; and determining the fault type of the fault on the transmission line by evaluating a plurality of criteria involving the sequence voltage and/or current and the further at least one voltage and/or current.

Various embodiments may preferably implement the following features:

Preferably, the method further comprises: controlling or protecting the transmission line of the electrical system based on the determined fault type.

Preferably, obtaining the sequence voltage and/or current and the further at least one voltage and/or current comprises: obtaining measurements of voltage and/or current being measured at a second location, in particular at a relay, on the transmission line of the electrical system; and determining the sequence voltage and/or current for the first location and the further at least one voltage and/or current for the first location based on the measurements of the at least one electrical parameter.

Preferably, the first location is different from the second location.

Preferably, evaluating a plurality of criteria involving the sequence voltage and/or current and the further at least one voltage and/or current comprises: comparing the sequence voltage and/or current to a first pre-set value; and/or comparing the further at least one voltage and/or current, preferably the amplitude of the further at least one voltage and/or current, more preferably the root-mean-square, rms, value of the further at least one voltage and/or current, to a second at least one pre-set value.

Preferably, the transmission line comprises a plurality of phases being carried along the transmission line, preferably three phases.

Preferably, the further at least one voltage and/or current is a phase voltage and/or current of the respective plurality of phases.

Preferably, the further at least one voltage and/or current is preferably in time-domain.

Preferably, the sequence voltage and/or current is a zero-sequence voltage and/or current.

Preferably, the first location is a reach point along the transmission line.

Preferably, the reach point is located around 80% of a line length of a transmission line from the relay location.

Preferably, the fault type is any one of a phase-to-ground fault, a phase-to-phase fault, a phase-to-phase-to-ground fault, a phase-to-phase-to-phase fault, and a phase-to-phase-to-phase-to-ground fault.

Preferably, the electrical system comprises a transmission line protection system, wherein the transmission line protection system preferably comprises a relay, more preferably a distance relay.

Preferably, controlling or protecting the transmission line of the electrical system comprises controlling, preferably tripping, the transmission line protection system based on a control signal generated according to determined fault type.

The present disclosure also relates to a device for determining a fault type of a fault on a transmission line, wherein the transmission line is comprised in an electrical system, the device comprising a processor being configured to: obtain a sequence voltage and/or current determined for a first location on the transmission line and a further at least one voltage and/or current determined for the first location on the transmission line; and determine the fault type of the fault on the transmission line by evaluating a plurality of criteria involving the sequence voltage and/or current and the further at least one voltage and/or current.

Preferably, the processor is further configured to control or protect the transmission line of the electrical system based on the determined fault type.

Preferably, the processor is configured to perform the obtaining the sequence voltage and/or current and the further at least one voltage and/or current by performing: obtaining measurements of voltage and/or current being measured at a second location, in particular at a relay, on the transmission line of the electrical system; and determining the sequence voltage and/or current for the first location and the further at least one voltage and/or current for the first location based on the measurements of the at least one electrical parameter, wherein the first location is different from the second location.

Preferably, the processor is configured to perform the evaluating a plurality of criteria involving the sequence voltage and/or current and the further at least one voltage and/or current by performing: comparing the sequence voltage and/or current to a first pre-set value; and/or comparing the further at least one voltage and/or current, preferably the amplitude of the further at least one voltage and/or current, more preferably the root-mean-square, rms, value of the further at least one voltage and/or current, to a second at least one pre-set value.

Preferably, the transmission line comprises a plurality of phases being carried along the transmission line, preferably three phases.

Preferably, the further at least one voltage and/or current is a phase voltage and/or current of the respective plurality of phases,

Preferably, the further at least one voltage and/or current is preferably in time-domain.

Preferably, the sequence voltage and/or current is a zero-sequence voltage and/or current.

Preferably, the first location is a reach point along the transmission line.

Preferably, the fault type is any one of a phase-to-ground fault, a phase-to-phase fault, a phase-to-phase-to-ground fault, a phase-to-phase-to-phase fault, and a phase-to-phase-to-phase-to-ground fault.

Preferably, the electrical system comprises a transmission line protection system, wherein the transmission line protection system preferably comprises a relay, more preferably a distance relay.

Preferably, controlling or protecting the transmission line of the electrical system comprises controlling, in preferably tripping, the transmission line protection system based on a control signal generated according to determined fault type.

The present disclosure further relates to a system for controlling or protecting the transmission line of an electrical system comprising a transmission line, the system comprising the electrical system and the device according to an embodiment disclose herein.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

**Description of the Drawings**

Fig. 1 illustrates a flow chart of a method according to an embodiment of the present disclosure.

Fig. 2 illustrates a system comprising the electrical system according to an embodiment of the present disclosure.

Fig. 3a) illustrates a table of evaluation criteria for faults related to phase A as implemented in an embodiment of the present disclosure.

Fig. 3b) illustrates a table of evaluation criteria for faults related to phase B as implemented in an embodiment of the present disclosure.

Fig. 3c) illustrates a table of evaluation criteria for faults related to phase C as implemented in an embodiment of the present disclosure.

Fig. 4 illustrates a simulation setup of an electrical system comprising a transmission line according to an embodiment of the present disclosure.

Fig. 5a) illustrates measured currents and voltages in case of a three phases-to-ground fault obtained through the simulation based on the setup of Fig. 4.

Fig. 5b) illustrates determined phase voltages at the reach point on the transmission line under a three phases-to-ground fault at the reach point.

Fig. 5c) illustrates determined phase voltages at the reach point on the transmission line under a three phases-to-ground fault at the beginning of line (close to relay location point).

Fig. 6a) illustrates measured currents and voltages in case of a phase-to-ground fault obtained through the simulation based on the setup of Fig. 4.

Fig. 6b) illustrates determined phase voltages at the reach point on the transmission line under a phases-to-ground fault at the reach point.

Fig. 6c) illustrates determined phase voltages at the reach point on the transmission line under a phases-to-ground fault at the beginning of the line.

Fig. 7a) illustrates measured currents and voltages in case of a phase-to-phase-to-ground fault obtained through the simulation based on the setup of Fig. 4.

Fig. 7b) illustrates determined phase voltages at the reach point on the transmission line under a phase-to-phase-to-ground fault at the reach point.

Fig. 7c) illustrates determined phase voltages at the reach point on the transmission line under a phase-to-phase-to-ground fault at the beginning of the line.

Fig. 8a) illustrates measured currents and voltages in case of a phase-to-phase fault obtained through the simulation based on the setup of Fig. 4.

Fig. 8b) illustrates determined phase voltages at the reach point on the transmission line under a phase-to-phase fault at the reach point.

Fig. 8c) illustrates determined phase voltages at the reach point on the transmission line under a phase-to-phase fault at the beginning of the line.

Fig. 9 illustrates time taken for determining the fault type based on the method according to an embodiment of the present disclosure.

Fig. 10 illustrates the verification results of the method according to an embodiment of the present disclosure.

Fig. 11 illustrates the verification results of the method according to an embodiment of the present disclosure.

Fig. 12a) illustrates a device implemented according to an embodiment of the present disclosure.

Fig. 12b) illustrates an electrical system implemented according to an embodiment of the present disclosure.

Fig. 12c) illustrates a system implemented according to an embodiment of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

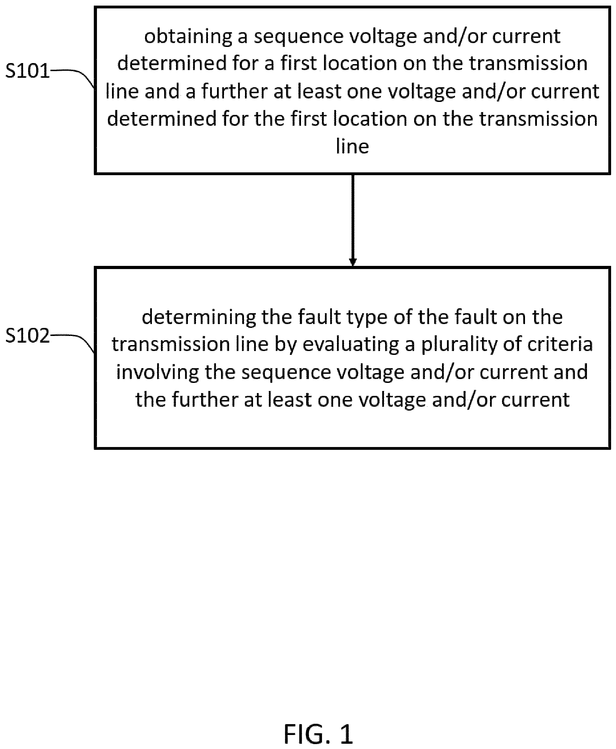

Fig. 1 illustrates a flow chart of a method according to an embodiment of the present disclosure. In an embodiment, the method of Fig. 1 is a method for determining a fault type of a fault on a transmission line, wherein the transmission line is comprised in an electrical system. The fault type determined according to the embodiment illustrated in Fig. 1 may be further processed and/or form a basis for further actions, e.g., controlling or protecting the electrical system. For instance, the fault type determined according to the embodiment illustrated in Fig. 1 may be used to control a transmission line protection system, in particular by generating a control signal to trip the transmission line protection system. For instance, the determined fault type may be used to trip a relay, in particular a distance relay, or a breaker that is preferably comprised in the transmission line system, so as to prevent the propagation of the fault to further sections of the transmission line stretching onwards from the location of the relay or the breaker. In an embodiment, the method of Fig. 1 is a method for controlling or protecting an electrical system comprising a transmission line.

At S101, a sequence voltage and/or current determined for a first location on the transmission line and a further at least one voltage and/or current determined for the first location on the transmission line are obtained.

The sequence voltage and/or current may be a positive, negative, and/or zero sequence voltage and/or current. A zero sequence quantity may be determined as one third (1/3) of the summation value of said quantity belonging to a pluraltiy of phases, wherein the pluraltiy of phases are carried on the transmission line. For instance, when the transmission line carries three phases, e.g., phase A, phase B, and phase C, a zero sequence voltage may be determined as one third (1/3) of the summation value of phase voltages of said three phases. Equivalently, the zero sequence voltage

$$V_{o\_rp} = \frac{1}{3}(V_{a\_rp} + V_{b\_rp} + V_{c\_rp})$$

is defined as , wherein $V_{a\_rp}$, $V_{b\_rp}$, and $V_{c\_rp}$ denote phase A voltage, phase B voltage, and phase C voltage, respectively at the reach point.

A root mean square value of a zero sequence voltage may be determined as $V_{o\_rms\_RP}$ =

$$\left( \sqrt{\frac{1}{T} \int_{T_o}^{T_o+T} (V_{o\_rp})^2 \times dt} \right)^2$$

, wherein $T_0$ is the starting time of the integration while $T$ is one cycle time period of fundamental power frequency in the given AC system.

The phase voltages used to determine the sequence quantities may be measurements that are measured at any point on the transmission line, in particular at a relay location, i.e., the location at which the relay is located.

The relay may comprise a sensing unit being configured to measure the voltages and/or currents of phase(s) being carried on the transmission line. The relay may further comprise a communication unit being configured to transmit and/or receive information, in particular said measured voltages and currents, to and/or from a different entity, e.g., a controller or a device comprising a processor being configured to perform steps disclosed herein.

In an embodiment, the first location is different from the relay point. In an embodiment, the first location is a reach point. The reach point may be a point along the transmission line impedance locus that is intersected by the boundary characteristic, in particular of a protection element, more particularly a tripping element such as a relay or a breaker.

The further at least one voltage and/or current may be the voltages and/or currents of at least one phase that is being carried on the transmission line. For instance, when the transmission line carries three phases, e.g., phase A, phase B, and phase C, the further at least one voltage and/or current may be the voltages of said three phases determined for the first location, in particular the reach point. The term "obtain" may bear the same meaning as, thus can be interchangeably used with, the terms such as "receive", "determine", or the like. For instance, said sequence voltage and/or current and/or the further at least one voltage and/or current may be determined by another entity different from the entity performing the steps as illustrated in Fig. 1, and thus the entity receives, from said another entity, said sequence voltage and/or current and/or the further at least one voltage and/or current. Alternatively said sequence voltage and/or current and/or the further at least one voltage and/or current may be determined by the same entity as the entity performing the steps as illustrated in Fig. 1. In an embodiment, said sequence voltage and/or current and/or the further at least one voltage and/or current are in time-domain, in particular determined according to the method disclosed in pending patent application ("LINE DISTANCE PROTECTION IN AN ELECTRICAL POWER SYSTEM BASED ON A REACH POINT VOLTAGE CALCULATION") of the same applicant filed on November 10, 2023 with the application number EP 23 209 147.0. The content of this pending application is fully incorporated herein by reference. It is understood by the skilled person that the term "determine" may bear the same meaning as, thus can be interchangeably used with, other terms such as "calculate", "compute", or the like.

At S102, the fault type of the fault on the transmission line is determined by evaluating a plurality of criteria involving the sequence voltage and/or current and the further at least one voltage and/or current.

In an embodiment, the method of Fig. 1 further comprises: controlling or protecting the transmission line of the electrical system based on the determined fault type.

In an embodiment, obtaining the sequence voltage and/or current and the further at least one voltage and/or current comprises: obtaining measurements of voltage and/or current being measured at a second location, in particular at a relay point, on the transmission line of the electrical system; and determining the sequence voltage and/or current for the first location and the further at least one voltage and/or current for the first location based on the measurements of the at least one electrical parameter.

In an embodiment, the first location is different from the second location.

In an embodiment, evaluating a plurality of criteria involving the sequence voltage and/or current and the further at least one voltage and/or current comprises: comparing the sequence voltage and/or current to a first pre-set value; and/or comparing the further at least one voltage and/or current, preferably the amplitude of the further at least one voltage and/or current, more preferably the root-mean-square, rms, value of the further at least one voltage and/or current, to a second at least one pre-set value.

In an embodiment, the transmission line comprises a plurality of phases being carried along the transmission line, preferably three phases.

In an embodiment, the further at least one voltage and/or current is a phase voltage and/or current of the respective plurality of phases.

In an embodiment, the further at least one voltage and/or current is preferably in time-domain.

In an embodiment, the sequence voltage and/or current is a zero-sequence voltage and/or current.

In an embodiment, the first location is a reach point along the transmission line.

In an embodiment, the fault type is any one of a phase-to-ground fault, a phase-to-phase fault, a phase-to-phase-to-ground fault, a phase-to-phase-to-phase fault, and a phase-to-phase-to-phase-to-ground fault.

In an embodiment, the electrical system comprises a transmission line protection system, wherein the transmission line protection system preferably comprises a relay, more preferably a distance relay.

In an embodiment, controlling or protecting the transmission line of the electrical system comprises controlling, preferably tripping, the transmission line protection system based on a control signal generated according to determined fault type.

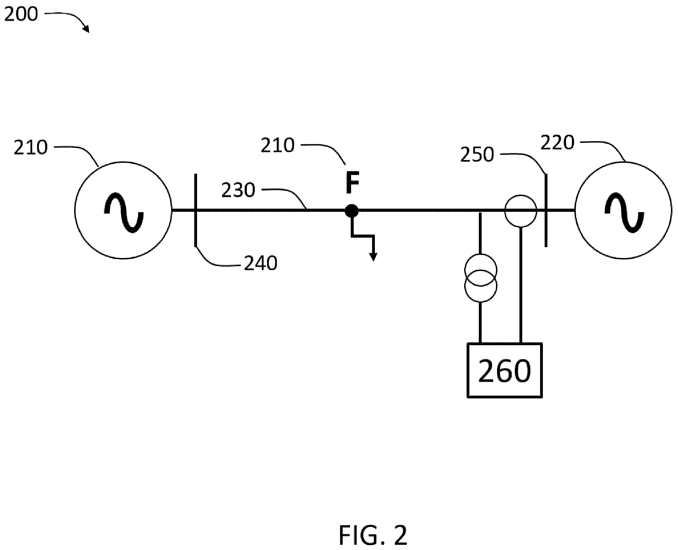

Fig. 2 illustrates a system comprising the electrical system according to an embodiment of the present disclosure. The system 200 comprises a transmission line 230. The transmission line 230 is terminated by a first terminal 240 at a first end of the transmission line and the transmission line 230 is terminated by a second terminal 250 at a second end of the transmission line, wherein the first end is different from the second end. The transmission line carries three different phases, i.e., phase-A, phase-B, and phase-C. The electrical system further comprises a first source 210 being electrically coupled to the first end of the transmission line and a second source 220 being electrically coupled to the second end of the transmission line. The system 200 further comprises a relay 260 being connected with and/or communicatively coupled to a voltage sensor and a current sensor for measuring the voltages and currents, respectively, of the three phases carried on the transmission line. It is understood by the skilled person that the phrase *"connected with"* used above describes the configuration wherein at least one, in particular all of, substation primary measurement signals are provided with merging units in which original analogue inputs is connected with merging units and the output of merging units are digital signals in the process bus which are connected with relay as digital inputs. In an embodiment, the relay 260 comprises the voltage sensor and the current sensor. In an embodiment, a device, in particular an intelligent electronic device, is or comprises the relay 260. In an embodiment, the device comprises a processor being configured to perform the method according to any one of the embodiments disclosed herein. The voltages and currents of the three phases carried on the transmission line are measured at a line end of the second terminal 250. For example, in case the line length is 100 km, the measurement points (first and second terminal 250 and 240) may be closely located at the two respective ends of the line. The distance between the end of the line and the respective measurement points may be a couple of meters depending on the current transformer locations. The measurements are performed before, during, and/or after a fault occurs. A fault location 210 on the transmission line is indicated by the letter "F" on Fig. 2. The method according to any embodiment disclosed herein may be applied to the system of Fig. 2.

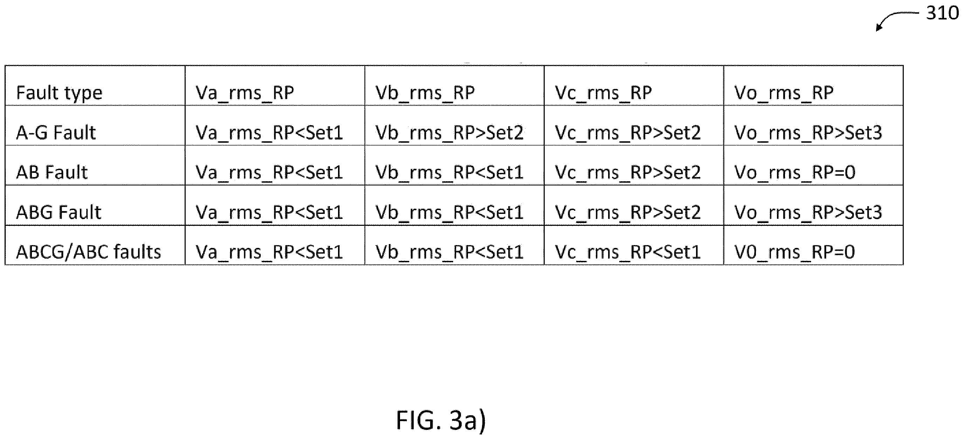

Fig. 3a), 3b), and 3c) illustrate specific and non-limiting embodiments of the method illustrated in Fig. 1. For illustrative purposes, the evaluation criteria therein are described in reference to the system illustrated in Fig. 2, but the application of said criteria is not limited thereto.

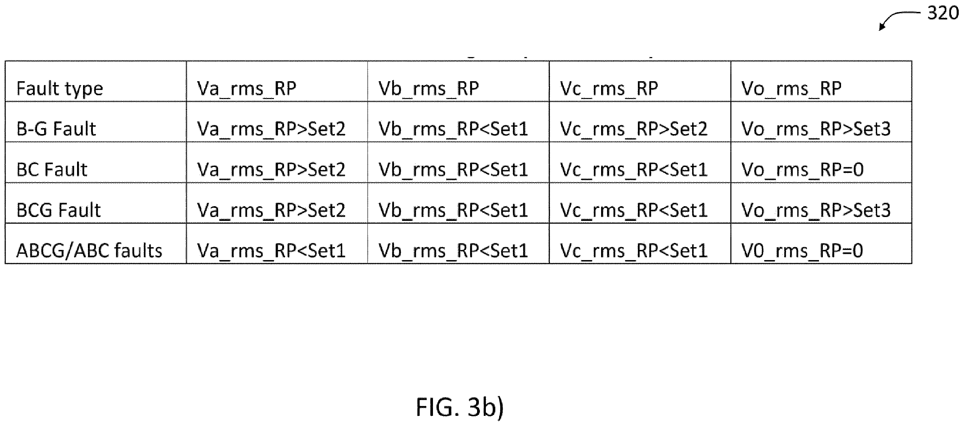

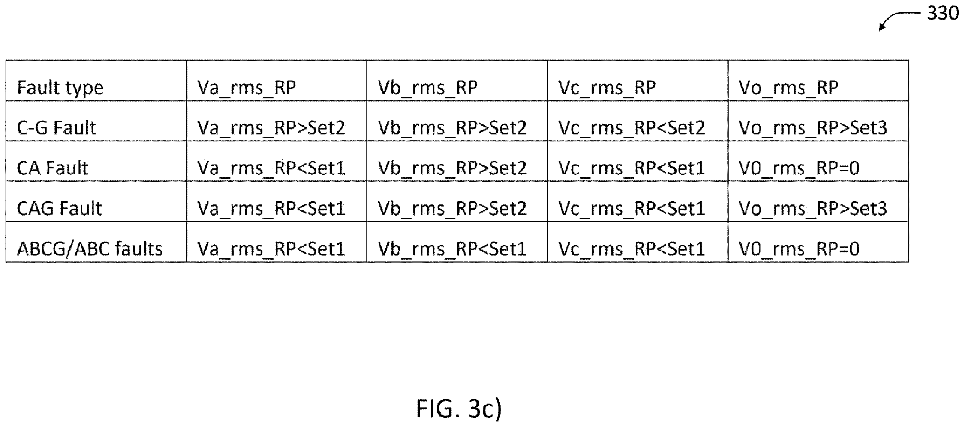

Fig. 3a) illustrates a table of evaluation criteria for faults related to phase A as implemented in an embodiment of the present disclosure. Fig. 3b) illustrates a table of evaluation criteria for faults related to phase B as implemented in an embodiment of the present disclosure. Fig. 3c) illustrates a table of evaluation criteria for faults related to phase C as implemented in an embodiment of the present disclosure.

A first table 310 on Fig. 3a), a second table 320 on Fig. 3b), and a third table 330 on Fig. 3c) respectively illustrate the evaluation criteria used to determine the phase A, phase B, and phase C related faults. In an embodiment, a fault type is determined when all of the evaluation criteria in the cells on the same row as said fault type in the first, second, and third table 310, 320, and 330 are met. For instance, the fault type is determined to be a phase A-to-ground fault (i.e., A-G fault in the first table 310) when the following condition is met:

$$Va\_rms\_RP < Set\ 1 \wedge Vb\_rms\_RP > Set\ 2 \wedge Vc\_rms\_RP > Set\ 2 \wedge Vo\_rms\_RP > Set\ 3$$

wherein

Va_rms_RP denotes a root-mean-square value of a phase A voltage at the reach point,
Vb_rms_RP denotes a root-mean-square value of a phase B voltage at the reach point,
Vc_rms_RP denotes a root-mean-square value of a phase C voltage at the reach point,
Vo_rms_RP denotes a root-mean-square value of a zero-sequence voltage at the reach point,

The rms value calculation of phase voltage values can be given by using equation below by using phase A as an example if T is one cycle period of fundamental power frequency and *To* is the integration starting time instant:

$$Va\_rms\_RP = \sqrt[2]{\frac{1}{T}\int_{T_0}^{To+T}(V_{a\_rp})^2 \times dt},$$

Set 1 denotes a first pre-defined threshold voltage,
Set 2 denotes a second pre-defined threshold voltage,
Set 3 denotes a third pre-defined threshold voltage, and
∧ denotes a logical operator representing an "AND" operation.

Set 1, Set 2, and Set 3 may be given as below as one default setting example:

Set1=0.8 p.u.;

Set2=0.95 p.u.; and

Set3=0.2 p.u., respectively, wherein p.u. denotes a per-unit value which is equal to the actual value divided by a base value. Here the rated voltage of each phase is the base value for the given calculation.

It is understood by the skilled person that Va_rms_RP, Vb_rms_RP, and Vb_rms_RP are specific and non-limiting examples of the further at least one voltage and/or current determined for the first location, as disclosed in Fig. 1. Similarly, Vo_rms_RP and the reach point are specific and non-limiting examples of the sequence voltage and the first location on the transmission line, respectively, as disclosed in Fig. 1.

A-G fault denotes phase A-to-ground fault,

AB fault denotes phase A-to-phase B fault,

ABG fault denotes phase-A-to-phase B-to-ground fault,

ABC fault denotes phase-A-to-phase B-to-phase C fault, and

ABCG fault denotes phase-A-to-phase B-to-phase C-to-ground fault.

Similarly, in the second table 320,

B-G fault denotes phase B-to-ground fault,

BC fault denotes phase B-to-phase C fault, and

BCG fault denotes phase-B-to-phase C-to-ground fault.

Also, in the third table 330,

C-G fault denotes phase C-to-ground fault,

CA fault denotes phase C-to-phase A fault, and

CAG fault denotes phase-C-to-phase A-to-ground fault.

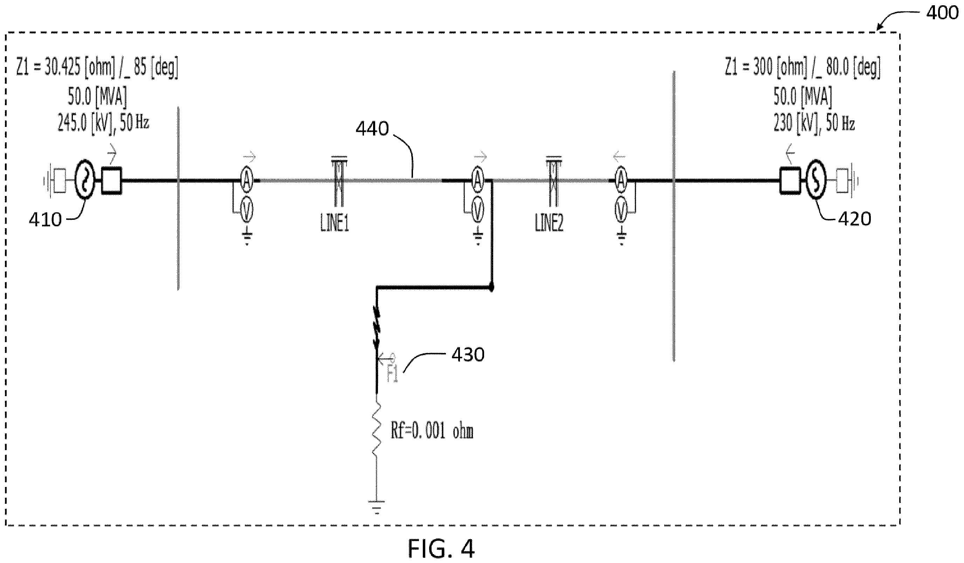

Fig. 4 illustrates a simulation setup of an electrical system comprising a transmission line according to an embodiment of the present disclosure. In particular, the simulation setup 400 is based on the system 200 of Fig. 2. The following is assumed for the simulation: the first source 410 operates at 50Hz with the voltage amplitude of 245 kV, generates 50 MVA of apparent power, and comprises the source impedance of 30.425 Ω with the source impedance angle of 85 degrees; the second source 420 operates at 50Hz with the voltage amplitude of 230 kV, generates 50 MVA of apparent power, and comprises the source impedance of 300 Ω with the source impedance angle of 80 degrees; 80% of the transmission line 440 starting from the relay point is set as the reach point, and the fault 430 occurs at $t = 0.5$ *sec.* The fault resistance is assumed to be Rf = 0.001 Ω. In general, sources may be related with generators together with connected lines. As power system sources may be dominated by inductors, most of source impedance may be also dominated by inductors (small resistance and bigger inductance). Thus, the source impedance angle may be in the range of 75 degrees to 85 degrees. A source impedance angle of 85 degrees with 30.425 Ω source impedance, as selected for the first source 410 in Fig. 4, may be considered to be a strong(er) source while a source impedance angle of 80 degrees with 300 Ω source impedance, as selected for the second source 420 in Fig. 4, may be considered as a weak(er) source. The strength of a source may be dependent on the value of the source impedance.

The following illustrate the measurements results of the simulation and the determined phase voltages at the reach point and at the relay point. The measurements of the phase voltages at the relay point are performed before, during, and after the respective simulated faults that is occurring at 80% of the transmission line starting from the relay point. The determined phase voltages at the reach point and at the relay point may be in time-domain, in particular determined according to the method disclosed in the above-mentioned pending patent application ("LINE DISTANCE PROTECTION IN AN ELECTRICAL POWER SYSTEM BASED ON A REACH POINT VOLTAGE CALCULATION").

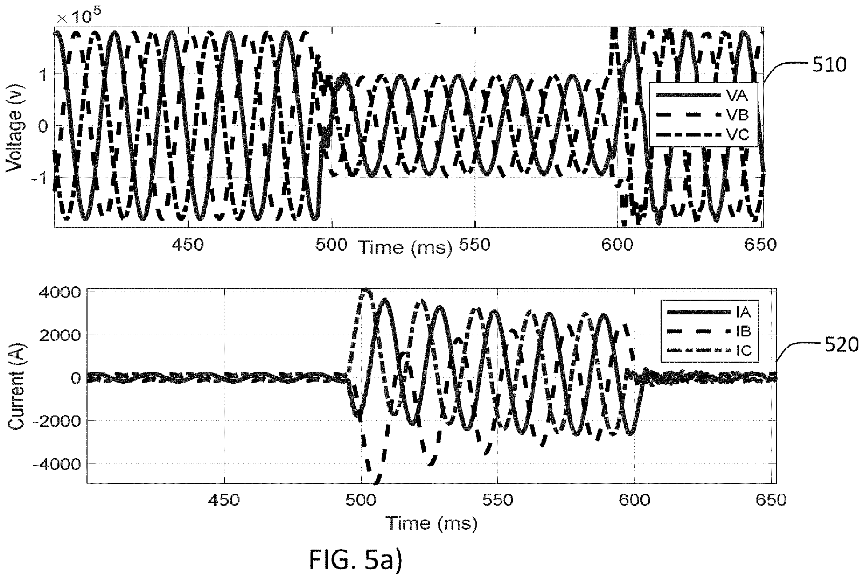

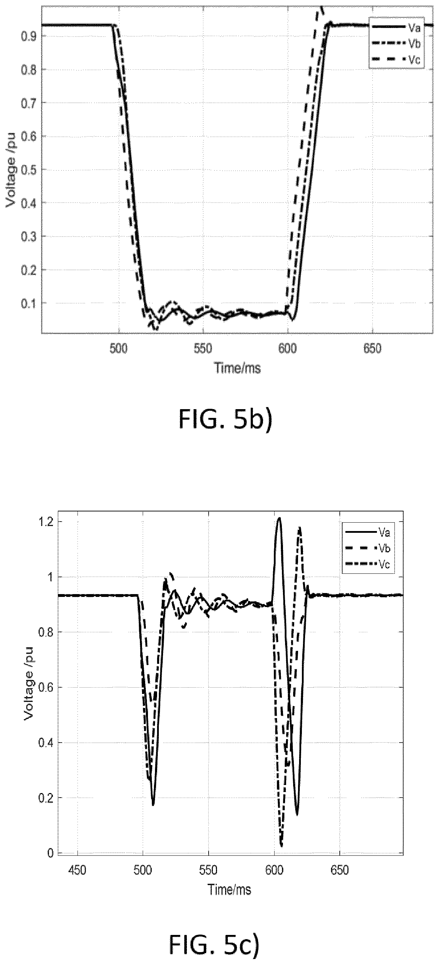

Fig. 5a) illustrates measured currents and voltages in case of a three phases-to-ground fault, i.e., phase A-to-phase B-to-phase C-to-ground (ABCG) fault, obtained through the simulation based on the setup of Fig. 4. Said voltages and currents are illustrated in a first subplot 510 and a second subplot 520, respectively. Fig. 5b) illustrates determined phase voltages at the reach point on the transmission line under said three phases-to-ground fault, which is applied at the reach point. The phase voltages at the reach point illustrated in Fig. 5b) correspond to Va_rms_RP, Vb_rms_RP, and Vc_rms_RP and form the basis of Vo_rms_RP. Accordingly, the evaluation criteria in the first table 310, the second table 320, and the third table 330 may be used to determine the fault type. Fig. 5c) illustrates determined phase voltages at the reach point on the transmission line under said three phases-to-ground fault, which is applied at the (or in the vicinity of) beginning of line, i.e., the relay point.

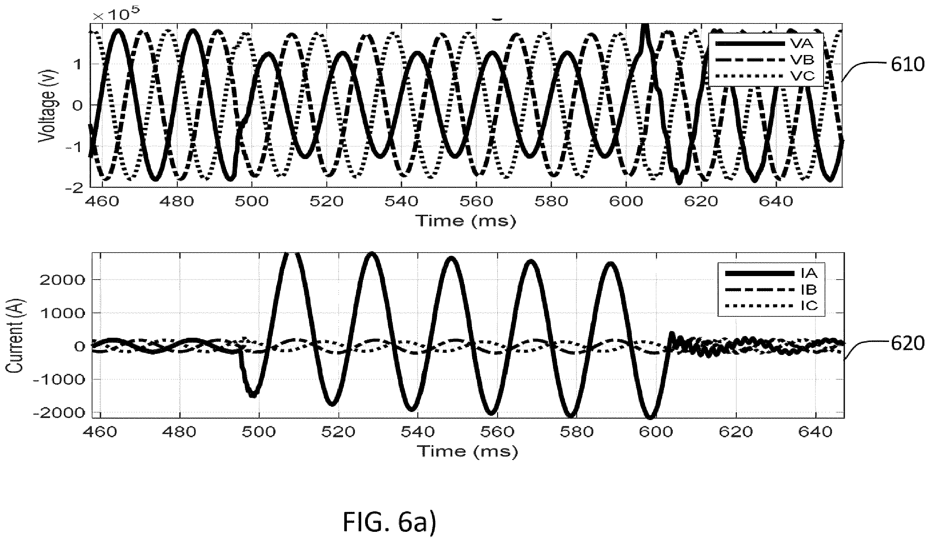

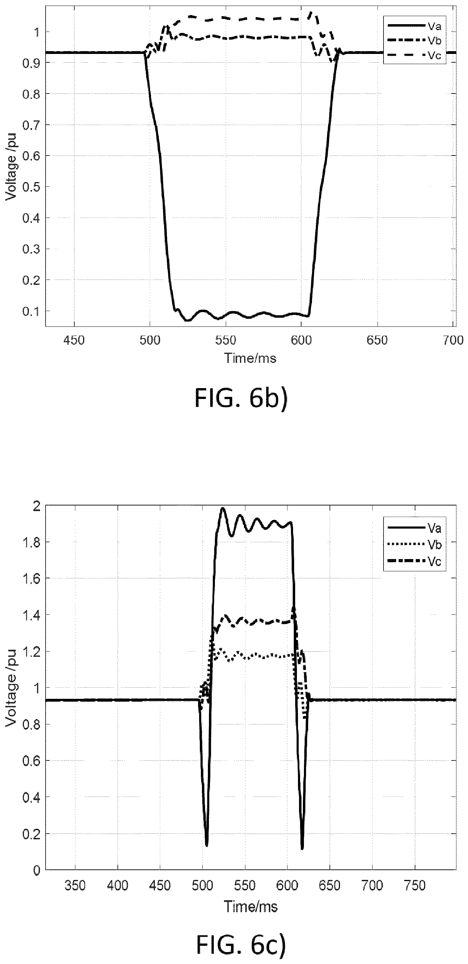

Fig. 6a) illustrates measured currents and voltages in case of a phase-to-ground fault, in particular phase A-to-ground (AG) fault, obtained through the simulation based on the setup of Fig. 4. Said voltages and currents are illustrated in a first subplot 610 and a second subplot 620, respectively. Fig. 6b) illustrates determined phase voltages at the reach point on the transmission line under said phases-to-ground fault, which is applied at the reach point. Fig. 6c) illustrates determined phase voltages at the reach point on the transmission line under a phases-to-ground fault, which is applied at the (or in the vicinity of) beginning of line, i.e., the relay point. The phase voltages at the reach point illustrated in Fig. 6b) correspond to Va_rms_RP, Vb_rms_RP, and Vc_rms_RP and form the basis of Vo_rms_RP. Accordingly, the evaluation criteria in the first table 310, the second table 320, and the third table 330 may be used to determine the fault type.

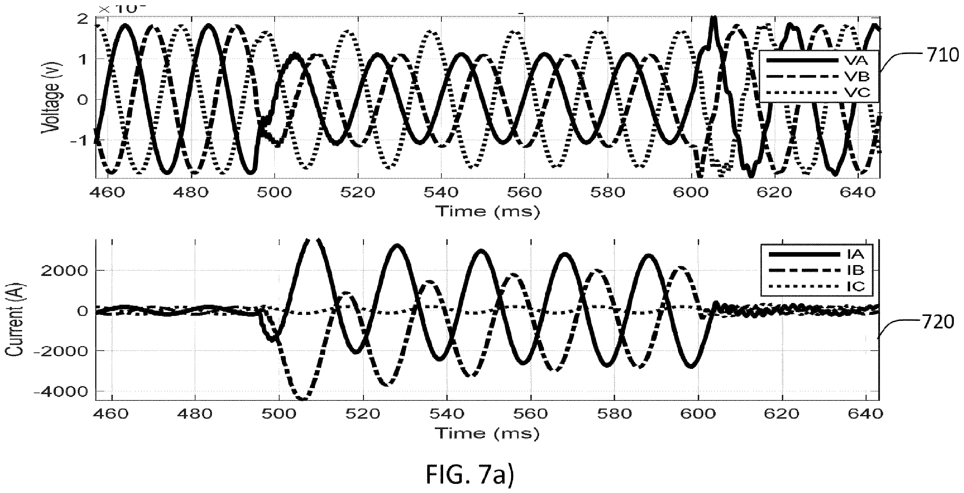

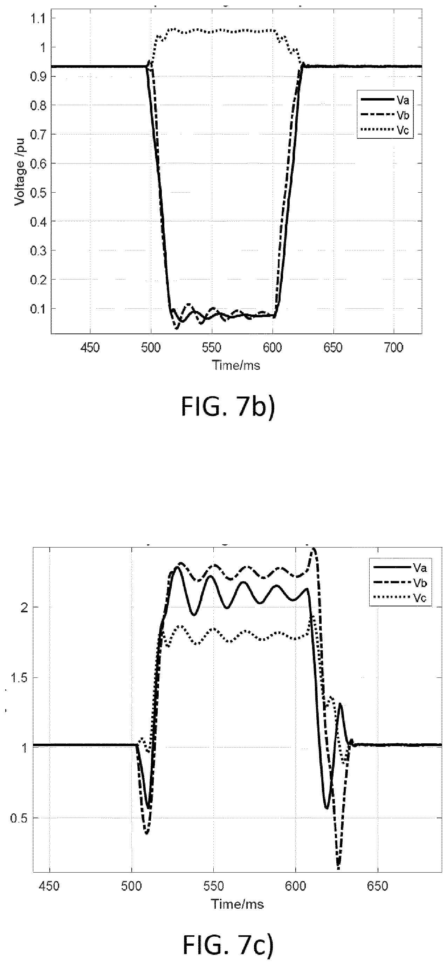

Fig. 7a) illustrates measured currents and voltages in case of a phase-to-phase-to-ground fault, in particular phase A-to-phase B-to-ground (ABG) fault, obtained through the simulation based on the setup of Fig. 4. Said voltages and currents are illustrated in a first subplot 710 and a second subplot 720, respectively. Fig. 7b) illustrates determined phase voltages at the reach point on the transmission line under a phase-to-phase-to-ground fault, which is applied at the reach point. Fig. 7c) illustrates determined phase voltages at the reach point on the transmission line under a phase-to-phase-to-ground fault, which is applied at the (or in the vicinity of) beginning of line, i.e., the relay point. The phase voltages at the reach point illustrated in Fig. 7b) correspond to Va_rms_RP, Vb_rms_RP, and Vc_rms_RP and form the basis of Vo_rms_RP. Accordingly, the evaluation criteria in the first table 310, the second table 320, and the third table 330 may be used to determine the fault type.

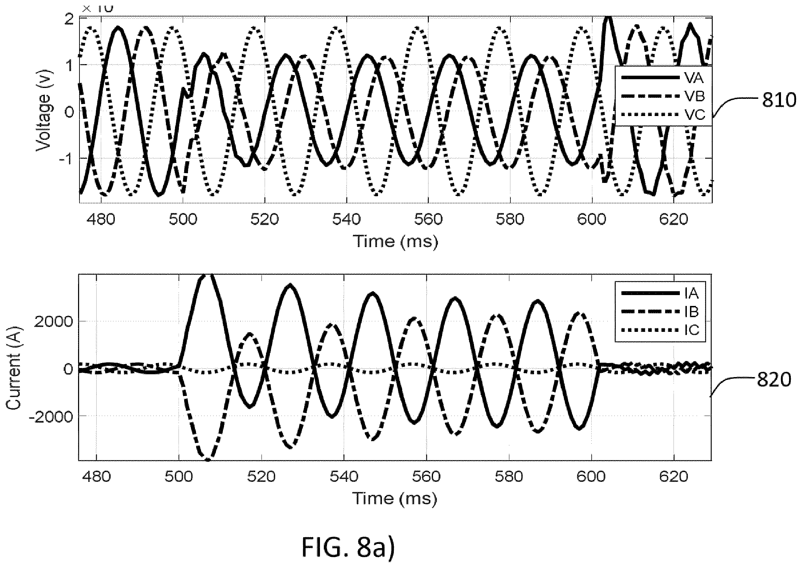

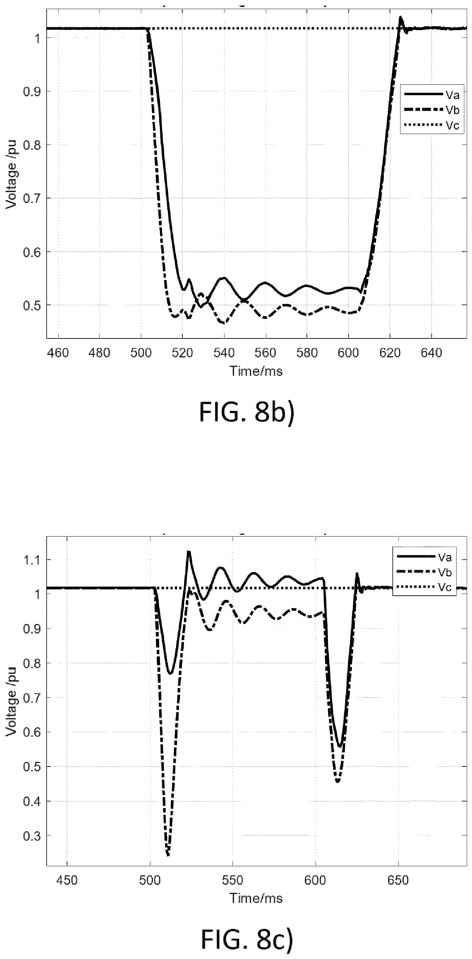

Fig. 8a) illustrates measured currents and voltages in case of a phase-to-phase fault, in particular phase A-to-phase B (AB) fault, obtained through the simulation based on the setup of Fig. 4. Said voltages and currents are illustrated in a first subplot 810 and a second subplot 820, respectively. Fig. 8b) illustrates determined phase voltages at the reach point on the transmission line under a phase-to-phase fault, which is applied at the reach point. Fig. 8c) illustrates determined phase voltages at the relay point on the transmission line under a phase-to-phase fault, which is applied at the (or in the vicinity of) beginning of line, i.e., the relay point. The phase voltages at the reach point illustrated in Fig. 8b) correspond to Va_rms_RP, Vb_rms_RP, and Vc_rms_RP and form the basis of Vo_rms_RP. Accordingly, the evaluation criteria in the first table 310, the second table 320, and the third table 330 may be used to determine the fault type.

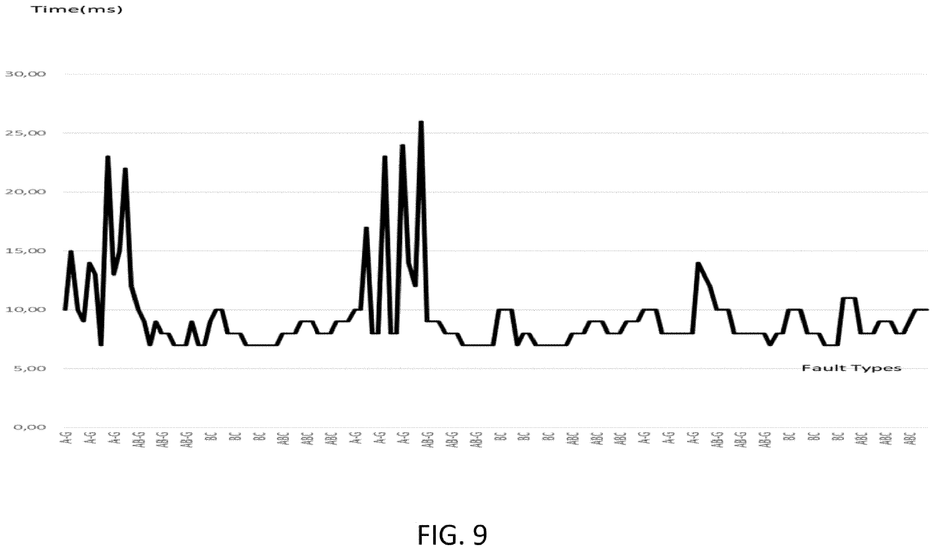

Fig. 9 illustrates time taken for determining the fault type based on the method according to an embodiment of the present disclosure. The fault is assumed to be an internal fault, i.e., the fault occurs within a portion of the transmission line protected by a transmission line protection system. The fault is further assumed to have been occurred within zone 1 setting area with varying fault resistances such as Rf= 0.01 Ω, Rf= 10 Ω, and Rf= 20 Ω. As evident from Fig. 9, the phase selection speed is influenced by the fault impedance values and the fault inception angles (i.e., the voltage phasor angle in the faulted phase/phases when a fault occurs). In Fig. 9, it is observed that there exists a negative correlation between the fault impedance and the speed of the phase selection, e.g., the lower fault impedance, the faster the phase detection output. It is also important to note that different fault inception angles also affect the speed of the phase selection. Three inception angles (30 degrees, 60 degrees, and 90 degrees) have been used in the tests as described herein. The average time taken to determine the fault type is 9.34 ms considering every detectable fault types. Such fast average fault type determination is achieved by, among others, the use of the phase voltages at the reach point, rendering the method computationally simplistic and efficient. This is particularly true when the phase voltages at the reach point are, or have been computed up to this stage, in time-domain. It is understood by the skilled person that the phrase "determining a fault type" may refer to "selecting a phase", in particular the phase related to the fault.

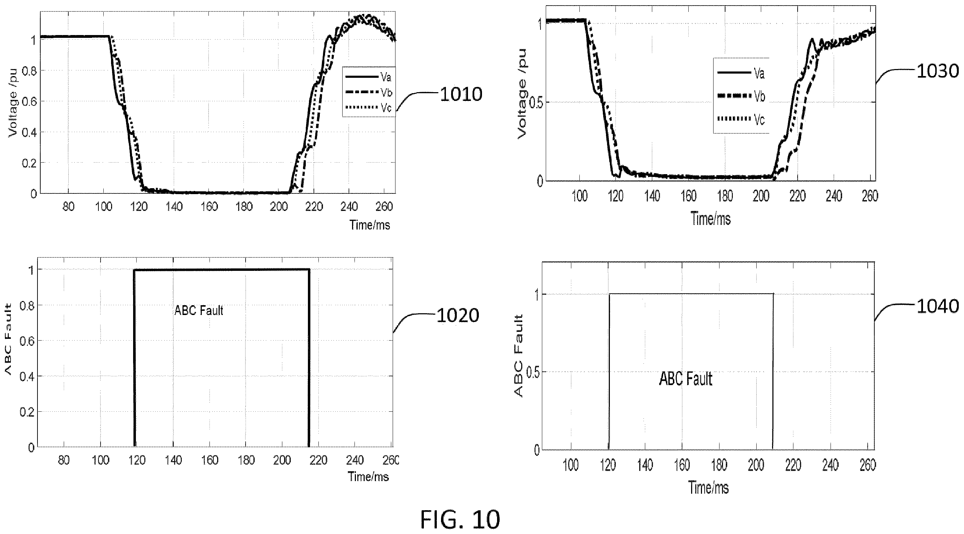

Fig. 10 illustrates the verification results of the method according to an embodiment of the present disclosure. In particular, the method is verified using a Type 3 wind farm, i.e., a wind power plant comprising generators generating power based on the wind, as the first power source 210 in Fig. 2.

A first subfigure 1010 illustrates the determined phase voltages at 70% of the transmission line length starting from the relay point under a three phases-to-ground fault, i.e., phase A-to-phase B-to-phase C-to-ground (ABCG) fault, wherein the fault is assumed to have occurred at $t$ = 1.5 *sec.* A second subfigure 1020 illustrates an exemplary decision signal indicating the determination of the fault type, in particular the ABCG fault. For instance, value 0 of the decision signal indicates that the monitored fault, ABCG fault in this case, is not determined, and value 1 of the decision signal indicates that the monitored fault is determined. Said determination is based on Va_rms_RP, Vb_rms_RP, and Vc_rms_RP as shown in the first subfigure 1010 and the evaluation criteria illustrated in Fig. 3a), 3b) and/or 3c).

A third subfigure 1030 illustrates the determined phase voltages at the relay point under a three phases-to-ground fault, i.e., phase A-to-phase B-to-phase C-to-ground (ABCG) fault, wherein the fault is assumed to have occurred at $t$ = 1.5 *sec.* A fourth subfigure 1040 illustrates an exemplary decision signal indicating the determination of the fault type, in particular the ABCG fault. For instance, value 0 of the decision signal indicates that the monitored fault, ABCG fault in this case, is not determined, and value 1 of the decision signal indicates that the monitored fault is determined. Said determination is based on Va_rms_RP, Vb_rms_RP, and Vc_rms_RP as shown in the third subfigure 1030 and the evaluation criteria illustrated in Fig. 3a), 3b) and/or 3c).

In an embodiment, the exemplary decision signal is a logical signal and/or is further used to control or protect the transmission line, in particular by triggering a further entity, more particularly a relay or a breaker of a transmission line protection system.

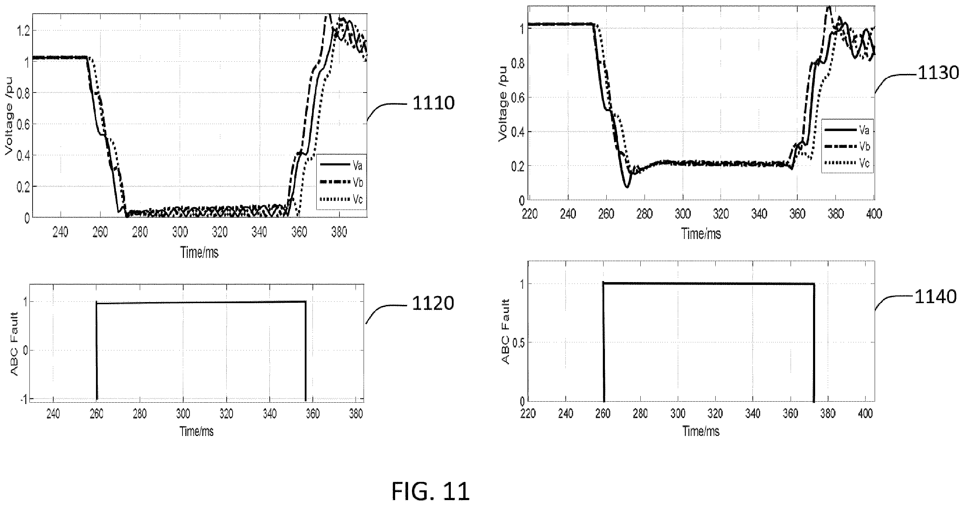

Fig. 11 illustrates the verification results of the method according to an embodiment of the present disclosure. In particular, the method is verified using a Type 4 wind farm, i.e., a wind power plant comprising generators generating power based on the wind, as the first power source 210 in Fig. 2.

A first subfigure 1110 illustrates the determined phase voltages at 70% of the transmission line length starting from the relay point under a three phases-to-ground fault, i.e., phase A-to-phase B-to-phase C-to-ground (ABCG) fault, wherein the fault is assumed to have occurred at $t$ = 1.25 *sec.* A second subfigure 1120 illustrates an exemplary decision signal indicating the determination of the fault type, in particular the ABCG fault. For instance, value 0 of the decision signal indicates that the monitored fault, ABCG fault in this case, is not determined, and value 1 of the decision signal indicates that the monitored fault is determined. Said determination is based on Va_rms_RP, Vb_rms_RP, and Vc_rms_RP as shown in the first subfigure 1110 and the evaluation criteria illustrated in Fig. 3a), 3b) and/or 3c).

A third subfigure 1130 illustrates the determined phase voltages at the relay point under a three phases-to-ground fault, i.e., phase A-to-phase B-to-phase C-to-ground (ABCG) fault, wherein the fault is assumed to have occurred at $t$ = 1.25 *sec.* A fourth subfigure 1140 illustrates an exemplary decision signal indicating the determination of the fault type, in particular the ABCG fault. For instance, value 0 of the decision signal indicates that the monitored fault, ABCG fault in this case, is not determined, and value 1 of the decision signal indicates that the monitored fault is determined. Said determination is based on Va_rms_RP, Vb_rms_RP, and Vc_rms_RP as shown in the third subfigure 1130 and the evaluation criteria illustrated in Fig. 3a), 3b) and/or 3c).

In an embodiment, the exemplary decision signal is a logical signal and/or is further used to control or protect the transmission line, in particular by triggering a further entity, in particular a relay or a breaker of a transmission line protection system.

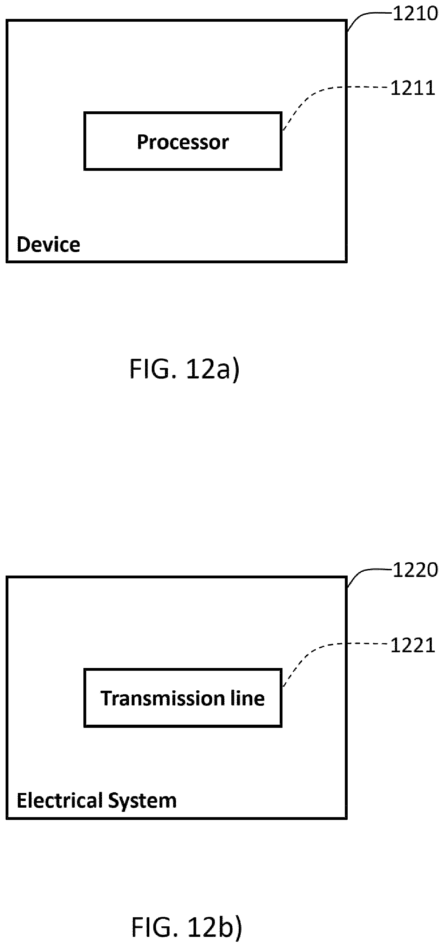

Fig. 12a) illustrates a device implemented according to an embodiment of the present disclosure. The device is a device 1210 for determining a fault type of a fault on a transmission line, wherein the transmission line is comprised in an electrical system, the device 1210 comprising a processor 1211 being configured to: obtain a sequence voltage and/or current determined for a first location on the transmission line and a further at least one voltage and/or current determined for the first location on the transmission line; and determine the fault type of the fault on the transmission line by evaluating a plurality of criteria involving the sequence voltage and/or current and the further at least one voltage and/or current.

The device may be a controller, wherein the controller is, or comprises a processor being, configured to perform the method disclosed herein, and preferably control or protect the transmission line. The device may further comprise a communication unit being configured to transmit and/or receive information to and/or from a different entity, e.g., a transmission line protection system. The transmission line system may comprise a relay and/or a breaker.

In an embodiment, the processor is further configured to control or protect the transmission line of the electrical system based on the determined fault type.

In an embodiment, the processor is configured to perform the obtaining the sequence voltage and/or current and the further at least one voltage and/or current by performing: obtaining measurements of voltage and/or current being measured at a second location, in particular at a relay, on the transmission line of the electrical system; and determining the sequence voltage and/or current for the first location and the further at least one voltage and/or current for the first location based on the measurements of the at least one electrical parameter, wherein the first location is different from the second location.

In an embodiment, the processor is configured to perform the evaluating a plurality of criteria involving the sequence voltage and/or current and the further at least one voltage and/or current by performing: comparing the sequence voltage and/or current to a first pre-set value; and/or comparing the further at least one voltage and/or current, preferably the amplitude of the further at least one voltage and/or current, more preferably the root-mean-square, rms, value of the further at least one voltage and/or current, to a second at least one pre-set value.

In an embodiment, the transmission line comprises a plurality of phases being carried along the transmission line, preferably three phases.

In an embodiment, the further at least one voltage and/or current is a phase voltage and/or current of the respective plurality of phases,

In an embodiment, the further at least one voltage and/or current is preferably in time-domain.

In an embodiment, the sequence voltage and/or current is a zero-sequence voltage and/or current.

In an embodiment, the first location is a reach point along the transmission line.

In an embodiment, the fault type is any one of a phase-to-ground fault, a phase-to-phase fault, a phase-to-phase-to-ground fault, a phase-to-phase-to-phase fault, and a phase-to-phase-to-phase-to-ground fault.

Fig. 12b) illustrates an electrical system implemented according to an embodiment of the present disclosure. The electrical system 1220 comprises a transmission line 1221. The electrical system 1220 may be controlled by the method according to any one of the embodiments disclosed herein. For instance, the system 200 illustrated in Fig. 2 may be a non-limiting example of the electrical system 1220.

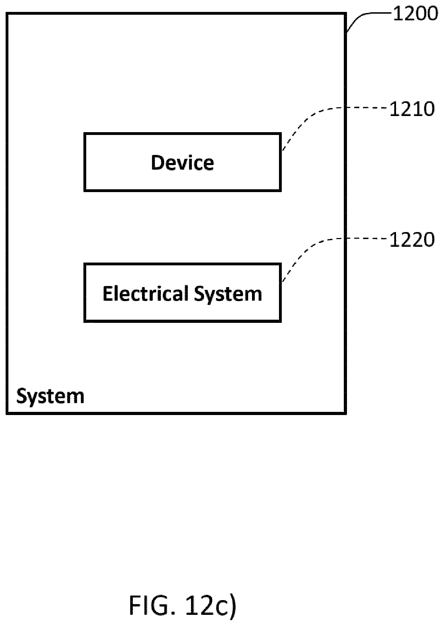

Fig. 12c) illustrates a system implemented according to an embodiment of the present disclosure. The system 1200 may be a system 1200 for controlling an electrical system 1220 comprising a transmission line 1221, the system 1200 comprising the electrical system 1220 and the device 1210 according to any one of the embodiments disclosed herein.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for determining a fault type of a fault on a transmission line, wherein the transmission line is comprised in an electrical system, the method comprising:

   obtaining a sequence voltage and/or current determined for a first location on the transmission line and a further at least one voltage and/or current determined for the first location on the transmission line; and
   determining the fault type of the fault on the transmission line by evaluating a plurality of criteria involving the sequence voltage and/or current and the further at least one voltage and/or current.

2. The method of claim 1, further comprising:
   controlling or protecting the transmission line of the electrical system based on the determined fault type.

3. The method of claim 1 or 2, wherein obtaining the sequence voltage and/or current and the further at least one voltage and/or current comprises:

obtaining measurements of voltage and/or current being measured at a second location, in particular at a relay point, on the transmission line of the electrical system; and

determining the sequence voltage and/or current for the first location and the further at least one voltage and/or current for the first location based on the measurements of the at least one electrical parameter, and

wherein the first location is different from the second location.

4. The method of any one of claims 1 to 3, wherein evaluating a plurality of criteria involving the sequence voltage and/or current and the further at least one voltage and/or current comprises:

comparing the sequence voltage and/or current, preferably a root-mean-square, rms, value thereof, to a first pre-set value; and/or

comparing the further at least one voltage and/or current, preferably the amplitude of the further at least one voltage and/or current, more preferably the root-mean-square, rms, value of the further at least one voltage and/or current, to a second at least one pre-set value.

5. The method of any one of claims 1 to 4, wherein

the transmission line comprises a plurality of phases being carried along the transmission line, preferably three phases,

the further at least one voltage and/or current is a phase voltage and/or current of the respective plurality of phases, and/or

the further at least one voltage and/or current is in time-domain.

6. The method of any one of claims 1 to 5, wherein

the sequence voltage and/or current is a zero-sequence voltage and/or current, and/or

the first location is a reach point along the transmission line.

7. The method of any one of claims 1 to 6, wherein the fault type is any one of a phase-to-ground fault, a phase-to-phase fault, a phase-to-phase-to-ground fault, a phase-to-phase-to-phase fault, and a phase-to-phase-to-phase-to-ground fault.

8. The method of any one of claims 2 to 7, wherein

the electrical system comprises a transmission line protection system, wherein the transmission line protection system preferably comprises a relay, more preferably a distance relay, and

controlling or protecting the transmission line of the electrical system comprises controlling, preferably tripping, the transmission line protection system based on a control signal generated according to determined fault type.

9. A device for determining a fault type of a fault on a transmission line, wherein the transmission line is comprised in an electrical system, the device comprising a processor being configured to:

obtain a sequence voltage and/or current determined for a first location on the transmission line and a further at least one voltage and/or current determined for the first location on the transmission line; and

determine the fault type of the fault on the transmission line by evaluating a plurality of criteria involving the sequence voltage and/or current and the further at least one voltage and/or current.

10. The device of claim 9, wherein the processor is further configured to control or protect the transmission line of the electrical system based on the determined fault type.

11. The device of claim 9 or 10, wherein the processor is configured to perform the method of claim 3 or 4.

12. The device of any one of claims 9 to 11, wherein

the transmission line comprises a plurality of phases being carried along the transmission line, preferably three phases,

the further at least one voltage and/or current is a phase voltage and/or current of the respective plurality of phases, and/or

the further at least one voltage and/or current is preferably in time-domain.

**13.** The device of any one of claims 9 to 11, wherein

the sequence voltage and/or current is a zero-sequence voltage and/or current,
the first location is a reach point along the transmission line, and/or
the fault type is any one of a phase-to-ground fault, a phase-to-phase fault, a phase-to-phase-to-ground fault, a phase-to-phase-to-phase fault, and a phase-to-phase-to-phase-to-ground fault.

**14.** The device of any one of claims 10 to 13, wherein

the electrical system comprises a transmission line protection system, wherein the transmission line protection system preferably comprises a relay, more preferably a distance relay, and
controlling or protecting the transmission line of the electrical system comprises controlling, in preferably tripping, the transmission line protection system based on a control signal generated according to determined fault type.

**15.** A system for controlling or protecting the transmission line of an electrical system comprising a transmission line, the system comprising the electrical system and the device of any one of claims 9 to 14.

S101 — obtaining a sequence voltage and/or current determined for a first location on the transmission line and a further at least one voltage and/or current determined for the first location on the transmission line

S102 — determining the fault type of the fault on the transmission line by evaluating a plurality of criteria involving the sequence voltage and/or current and the further at least one voltage and/or current

FIG. 1

FIG. 2

| Fault type | Va_rms_RP | Vb_rms_RP | Vc_rms_RP | Vo_rms_RP |
|---|---|---|---|---|
| A-G Fault | Va_rms_RP<Set1 | Vb_rms_RP>Set2 | Vc_rms_RP>Set2 | Vo_rms_RP>Set3 |
| AB Fault | Va_rms_RP<Set1 | Vb_rms_RP<Set1 | Vc_rms_RP>Set2 | Vo_rms_RP=0 |
| ABG Fault | Va_rms_RP<Set1 | Vb_rms_RP<Set1 | Vc_rms_RP>Set2 | Vo_rms_RP>Set3 |
| ABCG/ABC faults | Va_rms_RP<Set1 | Vb_rms_RP<Set1 | Vc_rms_RP<Set1 | V0_rms_RP=0 |

310

FIG. 3a)

EP 4 618 342 A1

| Fault type | Va_rms_RP | Vb_rms_RP | Vc_rms_RP | Vo_rms_RP |
|---|---|---|---|---|
| B-G Fault | Va_rms_RP>Set2 | Vb_rms_RP<Set1 | Vc_rms_RP>Set2 | Vo_rms_RP>Set3 |
| BC Fault | Va_rms_RP>Set2 | Vb_rms_RP<Set1 | Vc_rms_RP<Set1 | Vo_rms_RP=0 |
| BCG Fault | Va_rms_RP>Set2 | Vb_rms_RP<Set1 | Vc_rms_RP<Set1 | Vo_rms_RP>Set3 |
| ABCG/ABC faults | Va_rms_RP<Set1 | Vb_rms_RP<Set1 | Vc_rms_RP<Set1 | V0_rms_RP=0 |

320

FIG. 3b)

| Fault type | Va_rms_RP | Vb_rms_RP | Vc_rms_RP | Vo_rms_RP |
|---|---|---|---|---|
| C-G Fault | Va_rms_RP>Set2 | Vb_rms_RP>Set2 | Vc_rms_RP<Set2 | Vo_rms_RP>Set3 |
| CA Fault | Va_rms_RP<Set1 | Vb_rms_RP>Set2 | Vc_rms_RP<Set1 | V0_rms_RP=0 |
| CAG Fault | Va_rms_RP<Set1 | Vb_rms_RP>Set2 | Vc_rms_RP<Set1 | Vo_rms_RP>Set3 |
| ABCG/ABC faults | Va_rms_RP<Set1 | Vb_rms_RP<Set1 | Vc_rms_RP<Set1 | V0_rms_RP=0 |

330

FIG. 3c)

EP 4 618 342 A1

FIG. 4

FIG. 5a)

EP 4 618 342 A1

FIG. 5b)

FIG. 5c)

EP 4 618 342 A1

FIG. 6a)

FIG. 6b)

FIG. 6c)

FIG. 7a)

EP 4 618 342 A1

FIG. 7b)

FIG. 7c)

FIG. 8a)

FIG. 8b)

FIG. 8c)

FIG. 9

FIG. 10

FIG. 11

EP 4 618 342 A1

FIG. 12a)

FIG. 12b)

1200

Device 1210

Electrical System 1220

System

FIG. 12c)

Europäisches
Patentamt

European
Patent Office

Office européen
des brevets

## EUROPEAN SEARCH REPORT

**Application Number**

EP 24 16 2666

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/065913 A1 (LI YOUYI [SE] ET AL) 3 March 2022 (2022-03-03) * paragraphs [0034] - [0037], [0063] - [0065], [0116] - [0120]; figures 1,4,5,8 * | 1-15 | INV. H02H3/40 H02H7/26 |
| X | US 2020/088780 A1 (KASZTENNY BOGDAN Z [CA] ET AL) 19 March 2020 (2020-03-19) * paragraphs [0020] - [0037]; figures 1,2,5 * | 1,9 | |
| X | US 2017/012424 A1 (SCHWEITZER III EDMUND O [US] ET AL) 12 January 2017 (2017-01-12) * paragraphs [0104] - [0130]; figures 11,12 * | 1,9 | |

**TECHNICAL FIELDS SEARCHED (IPC)**

H02H

The present search report has been drawn up for all claims

| Place of search | Date of completion of the search | Examiner |
|---|---|---|
| Munich | 26 September 2024 | Colombo, Alessandro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 2666

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | | Publication date |
|---|---|---|---|---|
| US 2022065913 A1 | 03-03-2022 | CN | 114113876 A | 01-03-2022 |
| | | EP | 3961836 A1 | 02-03-2022 |
| | | JP | 7041779 B2 | 24-03-2022 |
| | | JP | 2022041920 A | 11-03-2022 |
| | | US | 2022065913 A1 | 03-03-2022 |
| US 2020088780 A1 | 19-03-2020 | CN | 112689767 A | 20-04-2021 |
| | | EP | 3850379 A1 | 21-07-2021 |
| | | US | 2020088780 A1 | 19-03-2020 |
| | | WO | 2020055461 A1 | 19-03-2020 |
| US 2017012424 A1 | 12-01-2017 | CN | 106796257 A | 31-05-2017 |
| | | EP | 3194987 A1 | 26-07-2017 |
| | | US | 2016077149 A1 | 17-03-2016 |
| | | US | 2016077150 A1 | 17-03-2016 |
| | | US | 2017012424 A1 | 12-01-2017 |
| | | US | 2017146613 A1 | 25-05-2017 |
| | | US | 2020350760 A1 | 05-11-2020 |
| | | WO | 2016044469 A1 | 24-03-2016 |

EPO FORM P0459

For more details about this annex : see Official Journal of the European Patent Office, No. 12/82

**REFERENCES CITED IN THE DESCRIPTION**

**Patent documents cited in the description**

- EP 23209147 A